# EUROPEAN PATENT APPLICATION

(11) **EP 3 941 021 A1**
(43) Date of publication of application: **19.01.2022**
(21) Application number: 20788193.9
(22) Date of filing: 10.04.2020
(51) Int. Cl.: H04L 29/08

(54) **PROCESSING METHOD, APPARATUS, AND SYSTEM**

(30) Priority: 12.04.2019 CN 201910296139
(71) Applicant: Huawei Technologies Co., Ltd., Shenzhen, Guangdong 518129 (CN)
(72) Inventor: WANG, Feng, Shenzhen, Guangdong 518129 (CN); ZHOU, Guohua, Shenzhen, Guangdong 518129 (CN); DOU, Shengyue, Shenzhen, Guangdong 518129 (CN); WANG, Jian, Shenzhen, Guangdong 518129 (CN)
(74) Representative: Gill Jennings & Every LLP
(86) International application number: PCT/CN2020/084329
(87) International publication number: WO 2020/207487

(57) **Abstract**

Embodiments of this application disclose a processing method, apparatus, and system. The processing method includes: A first terminal obtains a first update request. The first terminal sends a first message to a remote processing center, or the first terminal sends a second message to a local processing center, where both the first message and the second message carry information corresponding to the first update request. The first terminal obtains a fourth message sent by the local processing center, where the fourth message carries second update information obtained after the local processing center performs a preset processing operation on first update information, and the first update information is information obtained by the remote processing center in response to the first message or the third message. The first terminal communicates with the local processing center by using a radio link. The first terminal updates output information of the first terminal based on the second update information carried in the fourth message. In the technical solutions provided in the embodiments of this application, some functions are implemented by using the local processing center. This helps reduce costs of the first terminal.

## Description

This application claims priority to Chinese Patent Application No. 201910296139.8, filed with the China National Intellectual Property Administration on April 12, 2019 and entitled "PROCESSING METHOD, APPARATUS, AND SYSTEM", which is incorporated herein by reference in its entirety.

### TECHNICAL FIELD

This application relates to the field of electronic technologies, and in particular, to a processing method, apparatus, and system.

### BACKGROUND

With development of cloud computing, a system architecture including a local terminal device and a remote processing center is usually used for information processing. In this system architecture, some functions of the terminal device may be implemented by using the remote processing center. This helps reduce costs of the terminal device.

For example, in a virtual reality (Virtual Reality, VR) application scenario, VR is implemented by using a computer simulation system that is for creating and experiencing a virtual world. The computer simulation system usually generates a simulation environment by using a computer, and makes a user immerse in the environment by using an interactive three-dimensional dynamic vision and system simulation having an entity behavior. A VR system is usually implemented by a high-performance computer, a VR application, a VR head-mounted display device, and a device generating VR control information that are in cooperation. When the VR application is run, the VR application is controlled by using the device generating VR control information, and the VR application is displayed for the user by using the VR head-mounted display device. Currently, a VR rendering manner in the industry is that rendering is mainly performed on a local terminal. This imposes a high requirement on hardware, such as a central processing unit (Central Processing Unit, CPU) and a graphics processing unit (Graphics Processing Unit, GPU), of the local terminal. To reduce costs, cloud VR (Cloud VR) becomes an inevitable trend. Through the cloud VR, concepts and technologies of cloud computing and cloud rendering are used in VR services. With a high-speed and stable network, a display output and a sound output of the remote processing center are encoded, compressed, and then transmitted to the terminal device of the user. The cloud VR can greatly reduce user costs, enrich content experience, and accelerate popularization of VR business scenarios, and has other advantages. However, a latency of the cloud VR is relatively long. If the latency is excessively long, motion sickness may be caused. To avoid causing the motion sickness, a motion-to-photon (Motion to Photon, MTP) latency of a VR device should be less than 20 ms, that is, a time difference between time when the head of a person moves and time when an image seen by the eyes changes is within 20 ms. In this case, the motion sickness can be avoided properly. To reduce the latency, an asynchronous timewarp technology is usually used. A conventional asynchronous timewarp technology is implemented by the local terminal device. Using an asynchronous timewarp idea for a cloud VR system is also referred to as a device-cloud asynchronous timewarp technology. A rendering thread of the remote processing center runs in parallel with a timewarp thread of the terminal device. Each time the terminal device refreshes an image, the last frame obtained after the terminal device decodes the image is used as a basis for timewarp. After the asynchronous timewarp technology is used, the MTP latency of the cloud VR is determined by the terminal, and does not depend on procedures such as cloud rendering and network transmission. Therefore, the MTP latency can be greatly reduced.

However, a cloud VR system using device-cloud asynchronous timewarp requires a terminal device to have a function of implementing timewarp. This imposes a higher requirement on hardware of the terminal device, and increases consumption costs of a user.

### SUMMARY

Embodiments of this application provide a processing method, apparatus, and system, to reduce costs of a terminal device when a cloud architecture is used.

According to a first aspect, an embodiment of this application provides a processing method. The method includes: A first terminal obtains a first update request, where the first update request includes: an operation instruction of a user captured by the first terminal, motion information and an operation instruction that are of the user and that are captured by the first terminal, or target information captured by the first terminal. The first terminal sends a first message to a remote processing center, or the first terminal sends a second message to a local processing center, where both the first message and the second message carry information corresponding to the first update request, the second message is used to indicate the local processing center to send a third message to the remote processing center, and the third message carries information that is corresponding to the first update request and that needs to be uploaded to the remote processing center. The first terminal obtains a fourth message sent by the local processing center, where the fourth message carries second update information obtained after the local processing center performs a preset processing operation on first update information, and the first update information is information obtained by the remote processing center in response to the first message or the third message. The first terminal communicates with the local processing center by using a radio link; or after the first terminal sends the second message to the local processing center and the local processing center performs a specified operation on the received first message, the first terminal obtains a fifth message sent by the remote processing center, where the fifth message carries the first update information. The first terminal updates output information of the first terminal based on the second update information carried in the fourth message, or the first terminal updates output information of the first terminal based on the first update information carried in the fifth message. The specified operation includes an encoding operation.

It should be noted that the technical solution provided in this embodiment not only may be used in the VR field, but also may be used in fields such as video on demand, artificial intelligence, and augmented reality. The remote processing center includes one or more of the following cloud platforms: a cloud rendering platform, a cloud on-demand platform, an artificial intelligence cloud platform, and an augmented reality cloud platform.

According to the technical solution provided in this embodiment of this application, the local processing center that performs wireless communication with the first terminal is disposed. The local processing center communicates with the remote processing center and performs the preset processing operation, to share a processing capability required by the first terminal. This helps reduce costs of the first terminal.

In some possible implementations, a radio link used when the first terminal sends the message to the local processing center is different from a radio link used when the local processing center sends the message to the first terminal.

It should be noted that the radio link used when the first terminal sends a message to the local processing center may alternatively be the same as the radio link used when the local processing center sends a message to the first terminal. When the same radio link is used, a manner such as time division duplex or frequency division duplex may be used during data transmission. It should be noted that a link manner between the first terminal and the local processing center may be at least one of the following link manners: a wireless gigabit (Wireless Gigabit, WiGig), a millimeter wave (millimeter Wave, mmWave), a wireless fidelity (Wireless Fidelity, Wi-Fi), a new radio access technology (New Radio Access Technology, NR), long term evolution (Long Term Evolution, LTE), and the like. For example, in the VR field, uplink and downlink information transmission between a VR head-mounted display device that serves as the first terminal and a local processing center that serves as the local processing center may be performed in a same manner, for example, WiGig is used in both the uplink and downlink transmission. In some embodiments, the uplink and downlink transmission between the first terminal and the local processing center may alternatively be performed in different modes. For example, Wi-Fi is used for uplink transmission from the VR head-mounted display device to the local processing center, and WiGig is used for downlink transmission from the local processing center to the VR head-mounted display device. The uplink transmission from the VR head-mounted display device to the local processing center has two characteristics: a small amount of data and a high latency requirement. If mmWave is used for both the uplink and downlink transmission, to meet a latency requirement, a relatively high uplink-downlink time configuration needs to be used in time division multiplexing. Because an amount of uplink data is very small, spectral efficiency is very low. If mmWave transmission is used for the downlink transmission and NR is used for the uplink transmission on a C-band band, only a small quantity of bandwidth resources are occupied by the uplink transmission, to achieve higher spectral efficiency.

In the VR field, the remote processing center may include the cloud rendering platform, and the first message includes a first request or information obtained after the first request is encoded. The first update information includes information obtained after the remote processing center encodes updated data obtained by performing calculation and rendering on the received first message or third message. The preset processing operation includes one or more of the following operations: timewarp, encoding, decoding, artificial intelligence based reasoning, and direct transmission.

It should be noted that the first update request obtained by the first terminal may be directly transmitted by the first terminal to the remote processing center, or may be transmitted to the remote processing center via the local processing center. When the first terminal directly transmits the first update request to the remote processing center, the first terminal may have encoding and decoding functions. During processing, the first terminal encodes the first update request and then sends the first update request to the remote processing center. After processing, the remote processing center obtains the first update request. The remote processing center encodes the first update request and then sends the first update request to the first terminal. The first terminal decodes the received first update request, and sends the decoded information to the local processing center. The local processing center performs the preset processing operation, such as a timewarp operation. Then, the local processing center encodes information obtained after the timewarp operation, and transmits the information to the first terminal. After decoding the information from the local processing center, the first terminal updates a video displayed on the first terminal or audio played by the first terminal, controls the first terminal to change a location of the first terminal, or updates another parameter or status output by the first terminal.

It should be noted that H.264 and H.265 may be used to encode the information, or a joint source and channel coding manner such as WHDI or WirelessHD may be used.

When the first update request obtained by the first terminal is transmitted to the remote processing center via the local processing center, the local processing center encodes the first update request and sends the first update request to the remote processing center. After processing, the remote processing center sends a processing result to the first terminal or the local processing center. When the remote processing center encodes processed information and sends the processed information to the local processing center, the local processing center decodes the information sent by the remote processing center, performs the preset processing operation, and sends the information obtained by performing the preset processing operation to the first terminal, to trigger the first terminal to update the output information of the first terminal.

According to a second aspect, an embodiment of this application provides a processing method. The method includes: A local processing center obtains first update information obtained after a remote processing center responds to a first message or a third message, where the first message is information sent by a first terminal to the remote processing center. The first message includes information about a first update request obtained by the first terminal, and the first update request includes: an operation instruction of a user captured by the first terminal, motion information and an operation instruction that are of the user and that are captured by the first terminal, or target information captured by the first terminal. The third message is a message sent by the local processing center to the remote processing center in response to a second message, the second message is a message sent by the first terminal to the local processing center, the second message carries the information about the first update request, the second message indicates the local processing center to send the third message to the remote processing center, and the third message carries information that is corresponding to the first update request and that needs to be uploaded to the remote processing center. The local processing center obtains second update information after performing a preset processing operation on the first update information. The local processing center sends a fourth message to the first terminal, where the fourth message includes the second update information.

In some possible implementations, the remote processing center includes one or more of the following cloud platforms: a cloud rendering platform, a cloud on-demand platform, an artificial intelligence cloud platform, and an augmented reality cloud platform. The first message includes the first update request or information obtained after the first update request is encoded. The first update information includes information obtained after the remote processing center encodes updated data obtained by performing calculation and rendering on the received first message or third message. The preset processing operation includes one or more of the following operations: timewarp, encoding, decoding, artificial intelligence based reasoning, and direct transmission.

In some possible implementations, when the local processing center does not receive, within preset duration, the first update information sent by the remote processing center, the method further includes: The local processing center sends timeout information to the remote processing center, where the timeout information is used to indicate the remote processing center to perform an optimization operation.

According to a third aspect, this application provides a processing method. The method includes: A remote processing center obtains first update information after responding to a first message or a third message, where the first message is information sent by a first terminal to the remote processing center. The first message includes information about a first update request obtained by the first terminal, and the first update request includes: an operation instruction of a user captured by the first terminal, motion information and an operation instruction that are of the user and that are captured by the first terminal, or target information captured by the first terminal. A second message is a message sent by the first terminal to a local processing center, the second message is used to indicate the local processing center to send the third message to the remote processing center, and the third message carries information that is corresponding to the first update request and that needs to be uploaded to the remote processing center. The remote processing center sends a message carrying the first update information to the local processing center; the remote processing center sends, by using the first terminal, a message carrying the first update information to the local processing center; or the remote processing center sends a fifth message carrying the first update information to the first terminal.

In some possible implementations, the remote processing center includes one or more of the following cloud platforms: a cloud rendering platform, a cloud on-demand platform, an artificial intelligence cloud platform, and an augmented reality cloud platform. The first message includes the first update request or information obtained after the first update request is encoded.

The first update information includes information obtained after the remote processing center encodes updated data obtained by performing calculation and rendering on the received first message or third message. The preset processing operation includes one or more of the following operations: timewarp, encoding, decoding, artificial intelligence based reasoning, and direct transmission.

In some possible implementations, the method further includes: The remote processing center obtains timeout information sent by the local processing center, where the timeout information is used to indicate that the local processing center does not receive, within preset duration, the first update information sent by the remote processing center. The remote processing center performs an optimization operation in response to the timeout information. The optimization operation includes at least one of the following operations: optimizing a rendering operation by the remote processing center, optimizing a transmission process by the remote processing center, or reducing a performance parameter of transmission information by the remote processing center, where the optimizing a rendering operation by the remote processing center includes: interrupting, by the remote processing center, a rendering process of a frame currently exceeding a delay budget, and performing a rendering operation with reference to a frame corresponding to a latest update request; the optimizing a transmission process by the remote processing center includes: interrupting, by the remote processing center, transmission of a frame currently exceeding a delay budget, discarding all frames except the last frame in a transmission queue, and directly transmitting the last frame; and the reducing a performance parameter of transmission information by the remote processing center includes: reducing, by the remote processing center, a resolution of a transmitted video or improving a quantization parameter of video coding. The quantization parameter (QP, Quantization Parameter) is an important index of video coding. The quantization parameter determines a quantization step, and the quantization step determines fineness of a quantization process. A smaller QP determines a smaller quantization step, a smaller loss of real data in the quantization process, and higher video quality.

According to a fourth aspect, an embodiment of this application provides a processing apparatus. The processing apparatus serves as a first terminal, and includes: a first obtaining unit, configured to obtain a first update request, where the first update request includes: an operation instruction of a user, motion information and the operation instruction that are of the user, or captured target information (for example, in an application scenario such as augmented reality); a first sending unit, configured to: send a first message to a remote processing center, or send a second message to a local processing center, where both the first message and the second message carry information corresponding to the first update request, the second message is used to indicate the local processing center to send a third message to the remote processing center, and the third message carries information that is corresponding to the first update request and that needs to be uploaded to the remote processing center, where the first obtaining unit is further configured to: obtain a fourth message sent by the local processing center, where the fourth message carries second update information obtained after the local processing center performs a preset processing operation on first update information, and the first update information is information obtained by the remote processing center in response to the first message or the third message; and communicate with the local processing center by using a radio link; or after the first terminal sends the second message to the local processing center and the local processing center performs a specified operation on the received first message, obtain a fifth message sent by the remote processing center, where the fifth message carries the first update information; and a first processing unit, configured to: update output information of the first terminal based on the second update information carried in the fourth message; or update output information of the first terminal based on the first update information carried in the fifth message. The specified operation includes an encoding operation.

In some possible implementations, a radio link used when the first terminal sends the message to the local processing center is different from a radio link used when the local processing center sends the message to the first terminal.

In some possible implementations, the remote processing center includes one or more of the following cloud platforms: a cloud rendering platform, a cloud on-demand platform, an artificial intelligence cloud platform, and an augmented reality cloud platform. The first message includes a first request or information obtained after the first request is encoded. The first update information includes information obtained after the remote processing center encodes updated data obtained by performing calculation and rendering on the received first message or third message. The preset processing operation includes one or more of the following operations: timewarp, encoding, decoding, artificial intelligence based reasoning, and direct transmission.

According to a fifth aspect, an embodiment of this application provides a processing apparatus. The processing apparatus serves as a local processing center, and includes: a second obtaining unit, configured to obtain first update information obtained after a remote processing center responds to a first message or a third message, where the first message is information sent by a first terminal to the remote processing center, the first message includes information about a first update request obtained by the first terminal, and the first update request includes: an operation instruction of a user captured by the first terminal, motion information and an operation instruction that are of the user and that are captured by the first terminal, or target information captured by the first terminal; the third message is a message sent by the local processing center to the remote processing center in response to a second message, the second message is a message sent by the first terminal to the local processing center, the second message carries the information about the first update request, the second message indicates the local processing center to send the third message to the remote processing center, and the third message carries information that is corresponding to the first update request and that needs to be uploaded to the remote processing center; a second processing unit, configured to obtain second update information after performing a preset processing operation on the first update information; and a second sending unit, configured to send a fourth message to the first terminal, where the fourth message includes the second update information.

In some possible implementations, the remote processing center includes one or more of the following cloud platforms: a cloud rendering platform, a cloud on-demand platform, an artificial intelligence cloud platform, and an augmented reality cloud platform. The first message includes a first request or information obtained after the first request is encoded. The first update information includes information obtained after the remote processing center encodes updated data obtained by performing calculation and rendering on the received first message or third message. The preset processing operation includes one or more of the following operations: timewarp, encoding, decoding, artificial intelligence based reasoning, and direct transmission.

In some possible implementations, the second sending unit is further configured to send timeout information to the remote processing center, where when the local processing center does not receive, within preset duration, the first update information sent by the remote processing center, the timeout information is used to indicate the remote processing center to perform an optimization operation.

According to a sixth aspect, an embodiment of this application provides a processing apparatus. The processing apparatus serves as a remote processing center and includes: a third obtaining unit, configured to obtain a first message or a second message; a third processing unit, configured to obtain first update information after responding to the first message or a third message, where the first message is information sent by a first terminal to the remote processing center, the first message includes information about a first update request obtained by the first terminal, and the first update request includes: an operation instruction of a user captured by the first terminal, motion information and an operation instruction that are of the user and that are captured by the first terminal, or target information captured by the first terminal; and a second message is a message sent by the first terminal to a local processing center, the second message is used to indicate the local processing center to send the third message to the remote processing center, and the third message carries information that is corresponding to the first update request and that needs to be uploaded to the remote processing center; and a third sending unit, configured to: send a message carrying the first update information to the local processing center; send, by using the first terminal, a message carrying the first update information to the local processing center; or send a fifth message carrying the first update information to the first terminal.

In some possible implementations, the remote processing center includes one or more of the following cloud platforms: a cloud rendering platform, a cloud on-demand platform, an artificial intelligence cloud platform, and an augmented reality cloud platform. The first message includes the first update request or information obtained after the first update request is encoded. The first update information includes information obtained after the remote processing center encodes updated data obtained by performing calculation and rendering on the received first message or third message. The preset processing operation includes one or more of the following operations: timewarp, encoding, decoding, artificial intelligence based reasoning, and direct transmission.

In some possible implementations, the third obtaining unit is further configured to obtain timeout information sent by the local processing center, where the timeout information is used to indicate that the local processing center does not receive, within preset duration, the first update information sent by the remote processing center. The third processing unit is further configured to perform an optimization operation in response to the timeout information.

In some possible implementations, the optimization operation includes at least one of the following operations: optimizing a rendering operation by the third processing unit, optimizing a transmission process by the third processing unit, or reducing a performance parameter of transmission information by the third processing unit, where
the optimizing a rendering operation by the third processing unit includes: interrupting, by the third processing unit, a rendering process of a frame currently exceeding a delay budget, and performing a rendering operation with reference to a frame corresponding to a latest update request;
the optimizing a transmission process by the third processing unit includes: interrupting, by the third processing unit, transmission of a frame currently exceeding a delay budget, discarding all frames except the last frame in a transmission queue, and directly transmitting the last frame; and
the reducing a performance parameter of transmission information by the third processing unit includes: reducing, by the third processing unit, a resolution of a transmitted video or improving a quantization parameter of video coding.

According to a seventh aspect, an embodiment of this application provides a processing system. The processing system includes a first terminal, a local processing center, and a remote processing center. The first terminal is the processing apparatus according to any one of the fourth aspect or the implementations of the fourth aspect. The local processing center is the processing apparatus according to any one of the fifth aspect or the implementations of the fifth aspect. The remote processing center is the processing apparatus according to any one of the fifth aspect or the implementations of the fifth aspect.

According to the technical solutions provided in the embodiments of this application, the local processing center that performs wireless communication with the first terminal is disposed. The local processing center communicates with the remote processing center and performs the preset processing operation, to share a processing capability required by the first terminal. This helps reduce costs of the first terminal.

### BRIEF DESCRIPTION OF DRAWINGS

FIG. 1 is a schematic interaction flowchart of a processing method according to an embodiment of this application;
FIG. 2A is a schematic diagram of a serial processing method used in a Cloud VR system in an existing technology;
FIG. 2B is a schematic diagram of a timewarp technology in an existing technology;
FIG. 2C is a schematic diagram of an asynchronous timewarp technology in an existing technology;
FIG. 2D is a schematic diagram of asynchronous timewarp processing used in a Cloud VR system in an existing technology;
FIG. 3A is a schematic diagram of a Cloud VR architecture according to an embodiment of this application;
FIG. 3B is a schematic structural diagram of a Cloud VR system according to an embodiment of this application;
FIG. 3C is a schematic interaction flowchart of the Cloud VR system corresponding to FIG. 3B;
FIG. 4A is a schematic structural diagram of a cloud on-demand system according to an embodiment of this application;
FIG. 4B is a schematic interaction flowchart of the cloud on-demand system corresponding to FIG. 4A;
FIG. 5 A is a schematic structural diagram of an artificial intelligence system according to an embodiment of this application;
FIG. 5B is a schematic interaction flowchart of the artificial intelligence system corresponding to FIG. 5A;
FIG. 6A is a schematic structural diagram of a corresponding system in an augmented reality application scenario according to an embodiment of this application; and
FIG. 6B is a schematic interaction flowchart of the artificial intelligence system corresponding to FIG. 6A.

### DESCRIPTION OF EMBODIMENTS

The following clearly and completely describes technical solutions in embodiments of this application with reference to the accompanying drawings in the embodiments of this application. It is clear that the described embodiments are merely some but not all of the embodiments of this application. All other embodiments obtained by a person of ordinary skill in the art based on the embodiments of this application without creative efforts shall fall within the protection scope of this application.

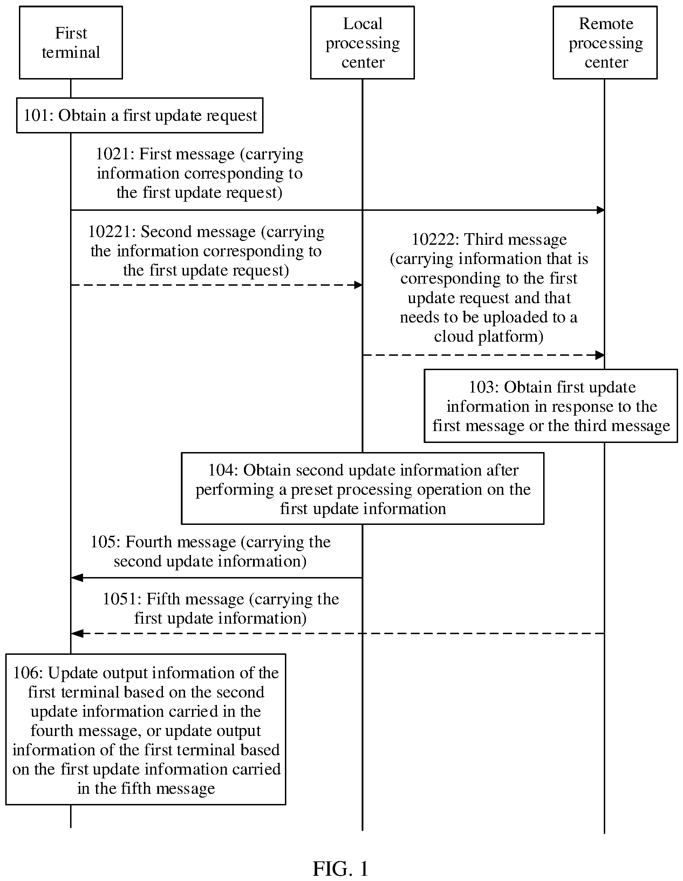

Referring to FIG. 1, a processing method provided in an embodiment of this application includes the following steps.

101: A first terminal obtains a first update request.

The first update request includes: an operation instruction of a user captured by the first terminal, or motion information and an operation instruction that are of the user and that are captured by the first terminal. For example, the first update request may include an instruction (for example, an instruction such as video content selected by the user or a selected video definition) of the user captured by using an instruction capture module. The first update request may further include motion information of the user obtained by a VR head-mounted display device by using a motion capture module. The first update request may also include information such as an image, a voice, and a motion captured from various users by using an information capture module.

1021: The first terminal sends a first message to a remote processing center.

The first message carries information corresponding to the first update request. During specific implementation, information corresponding to a first request may be the first update request, may be information obtained after the first update request is encoded, may be information obtained after the first update request is encoded, or may be information obtained after the first update request is encoded and compressed.

In some other embodiments, the first terminal may alternatively transmit information including the first update request via a local processing center. For example, steps 10221 and 10222 may be performed.

10221: The first terminal sends a second message to the local processing center.

The second message carries the information corresponding to the first update request. During specific implementation, information corresponding to a first request may be the first update request, may be information obtained after the first update request is encoded, may be information obtained after the first update request is encoded, may be information obtained after the first update request is compressed, or may be information obtained after the first update request is encoded and compressed. The second message is used to indicate the local processing center to send a third message to the remote processing center.

10222: The local processing center sends the third message to the remote processing center.

The third message carries information that is corresponding to the first update request and that needs to be uploaded to the remote processing center.

103: The remote processing center obtains first update information in response to the first message or the third message.

It should be noted that, in some feasible embodiments, the remote processing center may directly transfer the first update information to the local processing center. In some other possible embodiments, the remote processing center may transfer the first update information to the local processing center via the first terminal. After obtaining the first update information, the local processing center performs step 104. The first update information includes information obtained after the remote processing center encodes updated data obtained by performing calculation and rendering on the received first message or third message.

104: The local processing center obtains second update information after performing a preset processing operation on the first update information.

In some possible embodiments, the preset processing operation may include one or more of the following operations: timewarp, encoding, decoding, artificial intelligence based reasoning, and direct transmission.

105: The local processing center sends a fourth message carrying the second update information to the first terminal.

In some other embodiments, after the first terminal sends the second message to the local processing center and the local processing center performs a specified operation on the received first message, the first terminal may alternatively directly obtain the first update information from the remote processing center. For example, step 1051 may be performed. The specified operation includes an encoding operation.

1051: The local processing center obtains a fifth message sent by the remote processing center, where the fifth message carries the first update information.

106: The first terminal updates output information of the first terminal based on the second update information carried in the fourth message, or the first terminal updates output information of the first terminal based on the first update information carried in the fifth message.

It should be noted that the first terminal communicates with the local processing center by using a radio link. A radio link used when the first terminal sends the message to the local processing center may be the same as or different from a radio link used when the local processing center sends the message to the first terminal. In some possible embodiments, the remote processing center may include one or more of the following cloud platforms: a cloud rendering platform, a cloud on-demand platform, an artificial intelligence cloud platform, and an augmented reality cloud platform.

In some possible embodiments, when the local processing center does not receive, within preset duration, the first update information sent by the remote processing center, the method may further include: The local processing center sends timeout information to the remote processing center, where the timeout information is used to indicate the remote processing center to perform an optimization operation. The optimization operation includes at least one of the following operations: optimizing a rendering operation by the remote processing center, optimizing a transmission process by the remote processing center, or reducing a performance parameter of transmission information by the remote processing center, where
the optimizing a rendering operation by the remote processing center includes: interrupting, by the remote processing center, a rendering process of a frame currently exceeding a delay budget, and performing a rendering operation with reference to a frame corresponding to a latest update request;
the optimizing a transmission process by the remote processing center includes: interrupting, by the remote processing center, transmission of a frame currently exceeding a delay budget, discarding all frames except the last frame in a transmission queue, and directly transmitting the last frame; and
the reducing a performance parameter of transmission information by the remote processing center includes: reducing, by the remote processing center, a resolution of a transmitted video or improving a quantization parameter of video coding.

According to the technical solutions provided in the embodiments of this application, the local processing center that performs wireless communication with the first terminal is disposed. The local processing center communicates with the remote processing center and performs the preset processing operation, to share a processing capability required by the first terminal. This helps reduce costs of the first terminal.

To facilitate understanding of the technical solutions of this application, descriptions are provided below with reference to specific application scenarios.

### Embodiment 1

In this embodiment, a scenario in which the processing method provided by this application is used is Cloud VR.

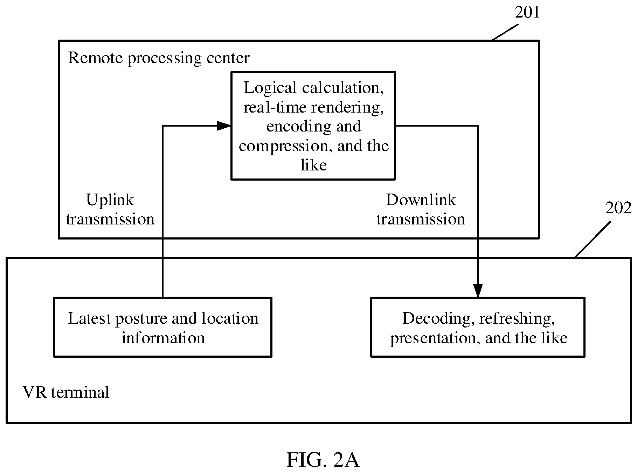

In a Cloud VR scenario, a serial processing method is commonly used in the industry. As shown in FIG. 2A, a Cloud VR system architecture includes a remote processing center 201 and a VR terminal 202. During specific implementation, the remote processing center 201 and the VR terminal 202 use a serial processing manner. As shown in FIG. 2A, during uplink transmission, the VR terminal 202 sends, to the remote processing center 201, obtained latest posture and location information triggered after a user operates the VR terminal 202. The remote processing center 201 performs operations such as logical calculation, real-time rendering, and encoding and compression on the obtained latest posture and location information. Then, during downlink transmission, the remote processing center 201 sends processed data to the VR terminal 202. The VR terminal 202 performs processing such as decoding, refreshing, and presentation on the data obtained from the remote processing center 201, to refresh information, such as audio, a video, and a location, displayed on the VR terminal 202. It should be noted that, when the serial processing method shown in FIG. 2A is used, it is difficult to control an MTP latency within 20 ms.

To reduce an MTP latency of a cloud VR system, an asynchronous timewarp technology is provided in an existing technology.

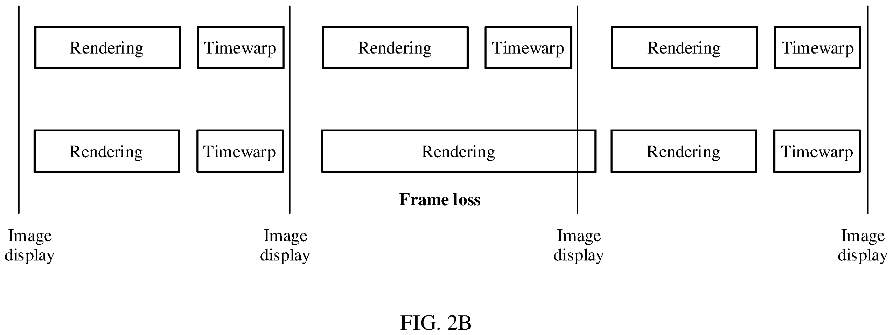

First, a timewarp (Timewarp, TW) technology is introduced. Timewarp is also referred to as reprojection, and means that a rendered image formed at a past moment is adjusted based on a difference between a current posture and a past posture and a difference between a current location and a past location, to form a display image corresponding to the current posture and location. As shown in FIG. 2B, after rendering is completed, timewarp is performed on the generated image, and then an image obtained after the timewarp is displayed. This technology has the following disadvantage: Timewarp can be completed only when there is enough time after the rendering is completed and before the image is displayed. A frame loss may occur if the rendering is not completed before the image is displayed.

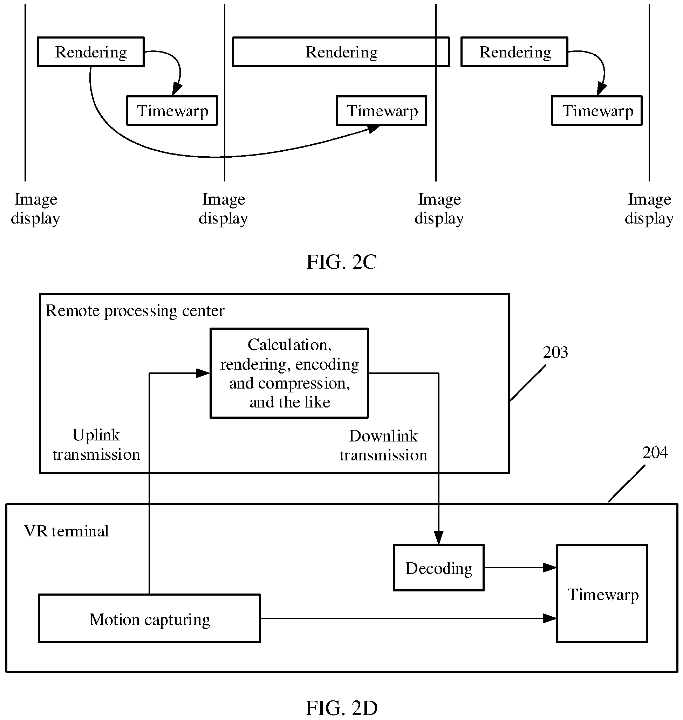

To resolve a frame loss problem, in an improvement, an asynchronous timewarp technology shown in FIG. 2C is provided in the existing technology. Asynchronous timewarp means that parallel threads are used for timewarp and rendering, and if the rendering is not completed in time, timewarp is performed by using an image that has been rendered in a previous frame. Because the timewarp thread is parallel to the rendering thread, the asynchronous timewarp technology can be used to generate an intermediate frame when the rendering cannot be completed in time, thereby resolving the frame loss problem.

A conventional asynchronous timewarp technology is implemented on a VR terminal. Using an asynchronous timewarp idea for the cloud VR system is also referred to as a device-cloud asynchronous timewarp technology. As shown in FIG. 2D, during uplink transmission, a VR terminal 204 sends motion information captured by a motion capture module to a remote processing center 203. The remote processing center 203 performs operations such as calculation, rendering, and encoding and compression on the obtained information, and then the remote processing center 203 sends the processed information to the VR terminal 204 during downlink transmission. The VR terminal 204 decodes the information obtained from the remote processing center 203, and transmits the decoded information and the motion information captured by the motion capture module to a timewarp module to perform a timewarp operation. In the existing technology, a rendering thread of the remote processing center 203 runs in parallel with a timewarp thread of the VR terminal 204. Each time the VR terminal 204 refreshes an image, the last frame obtained after the VR terminal 204 decodes the image is used as a basis for timewarp. After the asynchronous timewarp technology is used, the MTP latency of the cloud VR is determined by the VR terminal 204, and does not depend on procedures such as cloud rendering and network transmission. Therefore, the MTP latency can be greatly reduced. However, in this implementation, the VR terminal 204 needs to have a timewarp function, and this imposes a higher requirement on the VR terminal 204, and increases consumption costs of a user. In addition, the device-cloud asynchronous timewarp technology can only reduce the MTP latency, but cannot reduce a background latency. When a cloud rendering speed and a downlink transmission rate decrease, the background latency increases, affecting user experience.

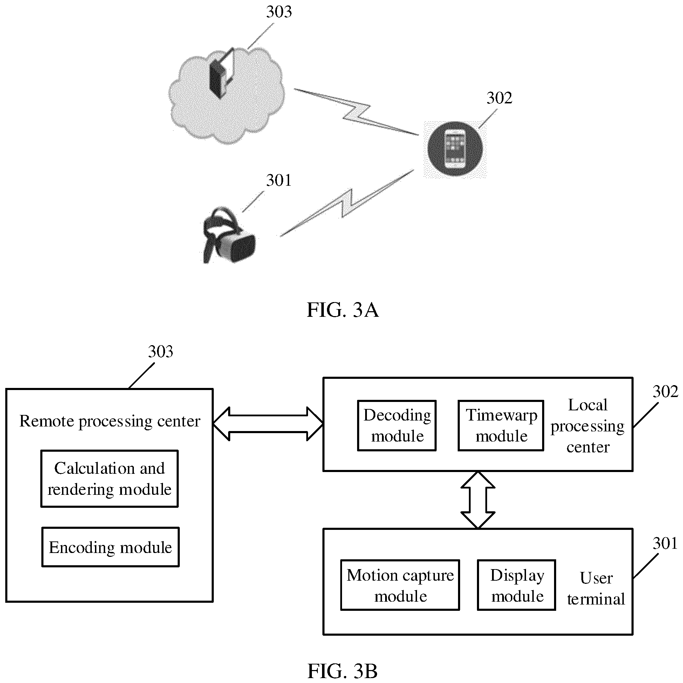

The technical solution provided by this application can resolve the foregoing defects in the existing technology. An architecture of a VR system provided by this application is shown in FIG. 3A.

Referring to FIG. 3A, the VR system corresponding to FIG. 3A includes a user terminal 301, a local processing center 302, and a remote processing center 303. The user terminal 301 is a first terminal device. The user terminal 301 communicates with the local processing center 302 by using a radio link, and a connection mode may be a wireless connection mode such as wireless Gigabit (Wireless Gigabit, WiGig) or millimeter wave (millimeter Wave, mmWave).

The user terminal 301 may be a device that can directly interact with a user, and may include at least one of the following devices: a VR head-mounted display device, a tablet computer, an artificial intelligence device, a display screen, a wireless joypad, or the like. A function of the user terminal 301 includes one or more of the following functions: capturing a user motion and capturing an instruction, generating an image and a voice, displaying an image and a voice, obtaining and displaying a video, obtaining and displaying a sound, obtaining and displaying an image, and the like.

FIG. 3B is a schematic structural diagram of a VR system. A user terminal 301 includes a motion capture module and a display module, a local processing center 302 includes a decoding module and a timewarp module, and a remote processing center 303 includes a calculation and rendering module and an encoding module.

The user terminal 301 is a device that can directly interact with a user, and may include at least one of the following devices: a VR head-mounted display device, a tablet computer, an artificial intelligence device, a display screen, a wireless joypad, and the like. A function of the user terminal 301 includes one or more of the following functions: capturing a user motion and capturing an instruction, generating an image and a voice, displaying an image and a voice, obtaining and displaying a video, obtaining and displaying a sound, obtaining and displaying an image, and the like.

The motion capture module included in the user terminal 301 is configured to capture motion information of the user, and the display module is configured to display a video obtained from the local processing center to the user.

The local processing center 302 is a device having strong computing and processing capabilities, and may be an electronic device such as a mobile phone or a personal computer. The local processing center 302 includes parts such as a decoding module and a timewarp module. The decoding module decodes a video, and the timewarp module performs timewarp on the decoded video. Timewarp is also referred to as reprojection, and means that a rendered image formed at a past moment is adjusted based on a difference between a current posture and a past posture and a difference between a current location and a past location, to form a display image corresponding to the current posture and location.

In this embodiment, a module with high computing complexity in the user terminal is delegated to the local processing center, so that costs and battery consumption of the user equipment are reduced. In addition, the local processing center has a stronger processing capability, which can reduce an MTP latency and improve user experience.

The user equipment 301 transmits the motion information of the user to the local processing center 302, and the local processing center 302 transmits, to the user terminal 301 such as a VR head-mounted display device, video data obtained after timewarp. The user equipment 301 and the local processing center 302 are connected by using a radio link. A connection mode may be WiGig, mmWave, Wi-Fi, NR, LTE, or the like. Uplink and downlink information transmission between the user terminal 301 and the local processing center 302 may be performed in a same mode. For example, WiGig is used for both the uplink and downlink transmission. Alternatively, the uplink and downlink transmission may be performed in different modes. For example, Wi-Fi is used for the uplink transmission from the user terminal 301 to the local processing center 302, and WiGig is used for the downlink transmission from the local processing center 302 to the user terminal 301.

Beneficial effects may be obtained by using different uplink and downlink transmission modes. For example, the uplink transmission from the user terminal 301 to the local processing center 302 has two characteristics: a small amount of data and a high latency requirement. If mmWave is used for both the uplink and downlink transmission, to meet a latency requirement, a relatively high uplink-downlink time configuration needs to be used in time division multiplexing. Because an amount of uplink data is very small, spectral efficiency is very low. If mmWave transmission is used for the downlink transmission and NR is used for the uplink transmission on a C-band band, only a small quantity of bandwidth resources are occupied by the uplink transmission, to achieve higher spectral efficiency.

It should be noted that when a same technology is used for the uplink and downlink transmission, time division duplex may be used, or frequency division duplex may be used.

The local processing center 302 transmits the motion information of the user to the remote processing center 303, and the remote processing center 303 transmits encoded video data to the local processing center 302. A connection mode of the local processing center 302 and the remote processing center 303 may be fixed network broadband, NR, LTE, or the like. Uplink and downlink information transmission between the remote processing center 303 and the local processing center 302 may be performed in a same mode. For example, fixed network broadband is used for both the uplink and downlink transmission. Alternatively, the uplink and downlink transmission may be performed in different modes. For example, fixed network broadband is used for the uplink transmission from the local processing center 302 to the remote processing center 303, and NR is used for the downlink transmission from the remote processing center 303 to the local processing center 302. For uplink transmission from the local processing center to a cloud rendering platform, an amount of data is very small, and requirements on importance and a latency are high. Therefore, a more reliable transmission mode, such as fixed network broadband, is preferably configured for the uplink transmission.

In some embodiments, the local processing center 302 may further feed back timeout information to the remote processing center 303, to optimize rendering and video transmission of the remote processing center 303. If the local processing center 302 does not receive, within expected duration (for example, 17 milliseconds), encoded video data sent by the remote processing center 303, the local processing center 302 may send timeout information to the remote processing center 303. After receiving the timeout information, the remote processing center 303 may perform at least one of the following optimization operations.

Specifically, the remote processing center 303 determines, with reference to rendering progress and transmission progress of the remote processing center 303, whether a rendering speed or a transmission rate decreases. If the rendering speed decreases, a rendering thread of a frame currently exceeding a delay budget may be interrupted, and rendering is performed again with reference to latest motion information. If the transmission rate decreases, transmission of the frame currently exceeding a delay budget may be interrupted, all frames except the last frame in a queue are discarded, and the last frame is directly transmitted.

In some possible embodiments, if the local processing center 302 continues to report the timeout information after the foregoing optimization method is used, it indicates that the rendering speed or the transmission rate cannot meet the latency requirement. In this case, the local processing center 302 may attempt to apply for more resources. For example, when the remote processing center 303 increases a priority of the rendering thread of the user, more transmission resources are applied for (for example, bandwidth is increased or transmit power is increased). If a system cannot allocate more resources for the user, video quality can be reduced (for example, a video resolution is properly reduced, or a quantization parameter of video coding is increased), to reduce rendering and transmission time and ensure the latency requirement.

For the timeout information fed back by the local processing center 302 to the remote processing center 303, an amount of data is very small, and requirements on importance and a latency are high. Therefore, a more reliable transmission mode, such as fixed network broadband, is preferably configured for the uplink transmission.

The remote processing center 303 can provide a platform that has strong cloud computing and cloud processing capabilities, and the platform may be Alibaba Cloud, Tencent Cloud, or the like. The calculation and rendering module is configured to perform logical calculation on motion information of the user and the scenario, to generate a video image. The encoding module is configured to encode a generated video, to reduce a video bitrate. A video coding format may be H.264, H.265, or the like.

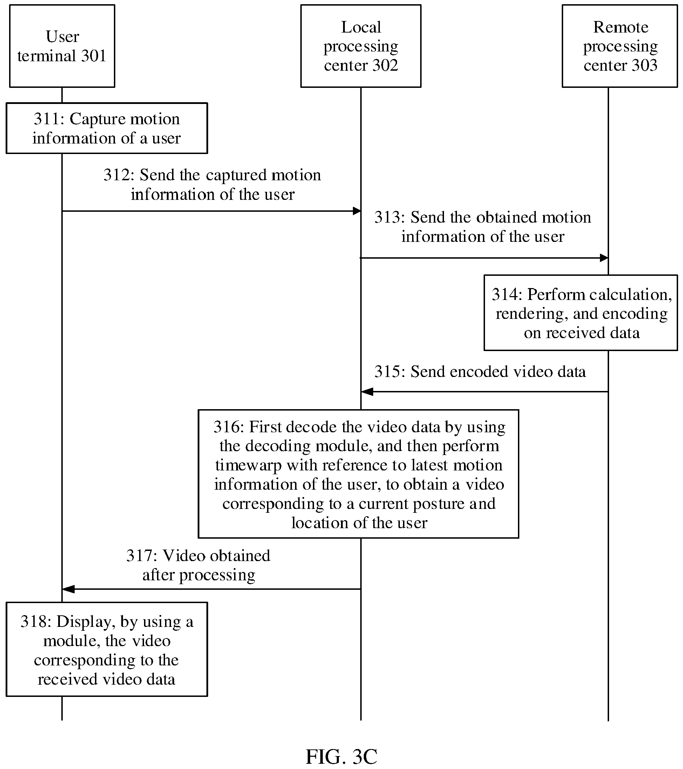

An interaction process between components in the VR system shown in FIG. 3C is shown in FIG. 3C, and includes the following steps.

311: The user terminal 301 captures motion information of a user.

For example, the user terminal 301 captures information such as a user motion and an instruction.

312: The user terminal 301 sends the captured motion information of the user to the local processing center 302.

A first message carries the motion information captured by the user terminal.

313: The local processing center 302 sends the captured motion information of the user to the remote processing center 303.

314: The remote processing center 303 performs calculation, rendering, and encoding on received data.

315: The remote processing center 303 sends encoded video data to the local processing center 302.

316: The local processing center 302 first decodes the video data by using the decoding module, and then performs timewarp with reference to latest motion information of the user, to obtain a video corresponding to a current posture and location of the user.

317: Send a video obtained after processing to the user terminal 301.

318: After receiving the video data sent by the local processing center 302, the user terminal 301 displays the video data for the user by using the display module.

In this embodiment, a function with high computing complexity in user equipment in an existing technology is delegated to a home user center. In this manner, costs of the user terminal are reduced, power consumption of the user terminal is reduced, and a battery life of the user terminal is prolonged. The local processing center has a stronger processing capability, which can reduce an MTP latency and improve user experience.

In the embodiment corresponding to FIG. 3A, the user terminal is not directly connected to the remote processing center. After obtaining the motion information of the user, the user terminal first transmits the information to the local processing center, and then transmits the information to the cloud rendering platform via the local processing center. It should be noted that, in some possible embodiments, the user terminal may be connected to the remote processing center, and the user terminal directly sends the motion information of the user to the remote processing center. A connection mode may include NR, LTE, or the like.

The user equipment in the system corresponding to FIG. 3B does not include a decoding module, and a decoding function is implemented in the local processing center. It should be noted that, in some other possible implementations, the user terminal may include a decoding module, and the user terminal is directly connected to the remote processing center. After the user moves, the user terminal obtains the motion information of the user by using the motion capture module, and transmits the information to the remote processing center. The remote processing center performs calculation, rendering, and encoding, and sends encoded video data to the user terminal. The user terminal decodes a received video by using the decoding module, and then sends the video to the local processing center. The local processing center performs timewarp on the received video, obtains a video corresponding to a current posture and location of the user, and sends the video to the user terminal for display.

The VR system corresponding to FIG. 3A includes only one user terminal, one local processing center, and one remote processing center. It should be noted that the VR system is not limited to including only one user terminal, one local processing center, or one cloud on-demand platform. One local processing center in the VR system can serve a plurality of user terminals or interact with a plurality of remote processing centers. During specific implementation, an interaction procedure is similar to the interaction procedure shown in FIG. 3C, and details are not described herein.

In some possible embodiments, the local processing center in the VR system shown in FIG. 3B may include an encoding module, and the user terminal may include a decoding module. After performing timewarp, the local processing center first encodes video data, and then sends the video data to the user terminal. After receiving an encoded video sent by the local processing center, the user terminal first decodes the video by using the decoding module, and then displays the video for the user by using the display module. An encoding scheme may be H.264 or H.265, or may be a joint source and channel coding manner, for example, an encoding scheme such as wireless home digital interface (Wireless Home Digital Interface, WHDI) or wireless high definition (Wireless High Definition, WirelessHD). The user terminal in this implementation has a decoding function, and an advantage is that an amount of communication data between the local processing center and the user terminal is reduced.

### Embodiment 2

An application scenario of this embodiment is the field of high-definition video on demand, and a video on demand system is used to implement high-definition video on demand. In this embodiment, the video on demand system includes a user terminal, a local processing center, and a cloud on-demand platform. The user terminal serves as a first terminal, and the cloud on-demand platform serves as a remote processing center.

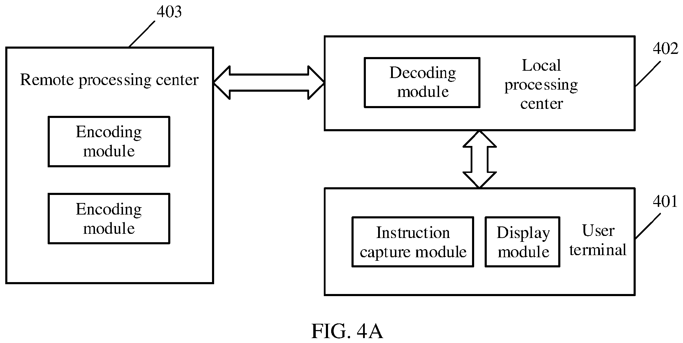

FIG. 4A is a schematic structural diagram of a video on demand system. A remote processing center 403 may include an encoding module and a storage module. The encoding module is configured to encode an original video into videos with different resolutions, and the storage module is configured to store the encoded videos. During specific implementation, a video coding format may be a format such as H.264 or H.265. A local processing center 402 includes a decoding module. The local processing center 402 is a device having a strong decoding capability, for example, may be a device such as a mobile phone or a personal computer. The local processing center 402 may decode, by using the decoding module, a video sent by the cloud on-demand platform. A user terminal 401 includes parts such as an instruction capture module and a display module. The instruction capture module captures an instruction of a user (for example, an instruction such as selection of video content by the user or selection of a definition), and the display module displays a video obtained from the local processing center to the user.

The user terminal 401 transmits instruction information of the user to the local processing center 402, and the local processing center 402 transmits decoded video data to the user terminal 401. The user terminal 401 and the local processing center 402 are connected by using a radio link. A connection mode may be WiGig, mmWave, Wi-Fi, NR, LTE, or the like. Uplink and downlink information transmission between the user terminal 401 and the local processing center 402 may be performed in a same mode. For example, WiGig is used for both the uplink and downlink transmission. When a same wireless communication technology is used for the uplink and downlink transmission, time division duplex or frequency division duplex may be used. Uplink and downlink information transmission between the user terminal 401 and the local processing center 402 may alternatively be performed in different modes. For example, Wi-Fi is used when the user terminal 401 transmits information to the local processing center 402, and WiGig is used when the local processing center 402 transmits information to the user terminal 401. The local processing center 402 transmits the instruction information of the user to the cloud on-demand platform 403, and the cloud on-demand platform 403 transmits encoded video data to the local processing center 402. A connection mode of the local processing center 402 and the cloud on-demand platform 403 may be fixed network broadband, NR, LTE, or the like. Uplink and downlink information transmission between the cloud on-demand platform 403 and the local processing center 402 may be performed in a same mode. For example, fixed network broadband may be used for both the uplink and downlink transmission. Uplink and downlink information transmission between the cloud on-demand platform 403 and the local processing center 402 may alternatively be performed in different modes. For example, NR is used for the uplink transmission from the local processing center 402 to the cloud on-demand platform 403, and fixed network broadband is used for the downlink transmission from the cloud on-demand platform 403 to the local processing center 402.

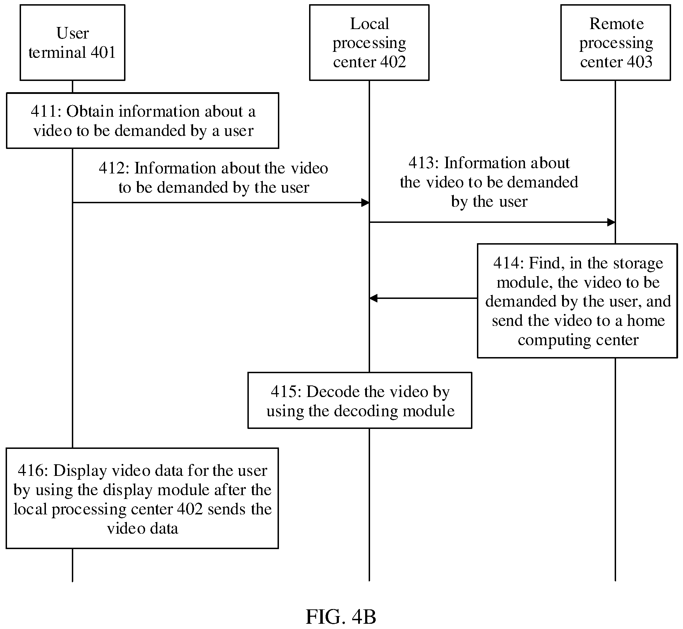

FIG. 4B is an interaction flowchart of a video on demand system. When the video on demand system performs video on demand, the following steps are included.

411: The user terminal 401 obtains, by using the instruction capture module, information about a video to be demanded by the user.

The information about the video to be demanded by the user may include video content, a resolution of the video content, and the like.

412: The user terminal 401 transmits, to the local processing center 402, the obtained information about the video to be demanded by the user.

413: The local processing center 402 transmits, to the cloud on-demand platform 403, the obtained information about the video to be demanded by the user.

414: The cloud on-demand platform 403 finds, in the storage module, the video demanded by the user, and sends the video to the local processing center.

415: The local processing center 402 decodes the video by using the decoding module, and then sends the video to the user terminal 401.

416: After receiving the video data sent by the local processing center 402, the user terminal 401 displays the video data for the user by using the display module.

In this embodiment, the user terminal 401 cooperates with the local processing center 402 to perform data transmission. It should be noted that, in some other possible embodiments, the user terminal 401 may be connected to the cloud on-demand platform 403, and the user terminal 401 may directly send the instruction information of the user to the cloud on-demand platform 403. A connection mode may include NR, LTE, or the like.

It should be noted that, when data transmission is performed between components in the video on demand system, to-be-transmitted data may be directly transmitted, or the to-be-transmitted data may be transmitted after being encoded.

It should be noted that the video on demand system is not limited to including only one user terminal, one local processing center, or one cloud on-demand platform. One local processing center in the video on demand system may be corresponding to a plurality of terminal devices and a plurality of cloud on-demand platforms. Similarly, one video on demand system may also include a plurality of local processing centers, and quantities of components are not limited. During specific implementation, an interaction procedure is similar to the interaction procedure shown in FIG. 4B, and details are not described herein.

### Embodiment 3

An application scenario of this embodiment is the field of artificial intelligence. An artificial intelligence system includes an artificial intelligence terminal, a local processing center, and an artificial intelligence cloud platform. The artificial intelligence terminal serves as a first terminal, and the artificial intelligence cloud platform serves as a remote processing center.

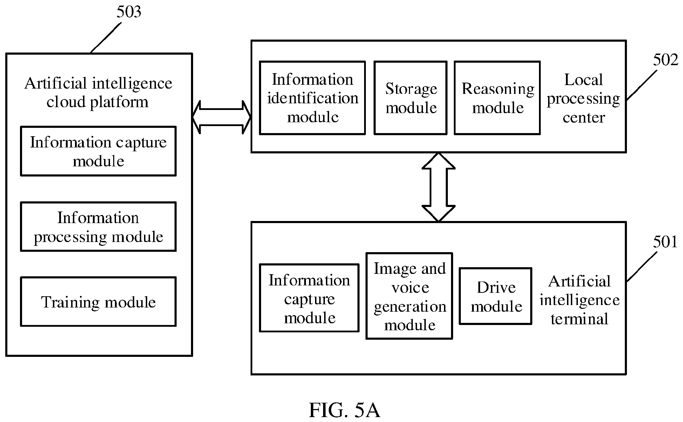

FIG. 5A is a schematic structural diagram of an artificial intelligence system. An artificial intelligence terminal 501 includes an information capture module, an image and voice generation module, a drive module, and the like. A function of the information capture module is to capture information, for example, capture an instruction of a user and current environment information. The image and voice generation module enables the user to output an image and a sound. The drive module controls a motion of the artificial intelligence terminal. The artificial intelligence terminal may be, for example, a home robot.

A local processing center 502 is a device having relatively strong computing and processing capabilities, for example, a device such as a mobile phone or a personal computer. The local processing center 502 includes parts such as an information identification module, a storage module, and a reasoning module. The information identification module identifies, with reference to a user setting, information sent by the artificial intelligence terminal, and determines information that can be sent to the artificial intelligence cloud platform 503 and information that can be used only locally. A function of the storage module is to store a trained neural network obtained from an artificial intelligence cloud platform 503. The reasoning module reasons out a next motion (including image display, a voice output, a motion behavior, or the like) of the artificial intelligence terminal based on the trained neural network in the storage module and information obtained from the artificial intelligence terminal.

The artificial intelligence cloud platform 503 includes parts such as an information capture module, an information processing module, and a training module. The information capture module captures a large amount of information (for example, an image, a voice, a motion behavior, and results of various motions) from various users. The information processing module checks the captured information, filters out useless information and duplicate information, and classifies useful information. The training module obtains corresponding information from the information processing module to perform artificial intelligence training. A training algorithm may include one or more of the following algorithms: a decision tree algorithm, a neural network algorithm, a naive Bayes algorithm, a self-organizing mapping algorithm, or the like. After the training is performed by the training module, the artificial intelligence cloud platform can obtain the trained neural network.

The artificial intelligence terminal 501 transmits the captured information (including the instruction of the user, the current environment information, and the like) to the local processing center 502, and the local processing center 502 transmits the next motion (including the image display, the voice output, the motion behavior, or the like) of the artificial intelligence terminal to the artificial intelligence terminal 501. The artificial intelligence terminal 501 and the local processing center 502 are connected by using a radio link. A connection mode may be WiGig, mmWave, Wi-Fi, NR, LTE, or the like. Uplink and downlink information transmission between the artificial intelligence terminal 501 and the local processing center 502 may be performed in a same mode. For example, WiGig is used for both the uplink and downlink transmission. Alternatively, the uplink and downlink transmission may be performed in different modes. For example, Wi-Fi is used for the uplink transmission from the artificial intelligence terminal 501 to the local processing center 502, and WiGig is used for the downlink transmission from the local processing center 502 to the artificial intelligence terminal 501. When a same technology is used for the uplink and downlink transmission, time division duplex may be used, or frequency division duplex may be used.

The local processing center 502 transmits user information to the artificial intelligence cloud platform 503 on the premise of obtaining authorization, and the artificial intelligence cloud platform 503 transmits the trained neural network to the local processing center 502. A connection mode of the local processing center 502 and the artificial intelligence cloud platform 503 may be fixed network broadband, NR, LTE, or the like. Uplink and downlink information transmission between the artificial intelligence cloud platform and the local processing center may be performed in a same mode. For example, fixed network broadband is used for both the uplink and downlink transmission. Alternatively, the uplink and downlink transmission may be performed in different modes. For example, NR is used for the uplink transmission from the local processing center 502 to the artificial intelligence cloud platform 503, and fixed network broadband is used for the downlink transmission from the artificial intelligence cloud platform 503 to the local processing center 502.

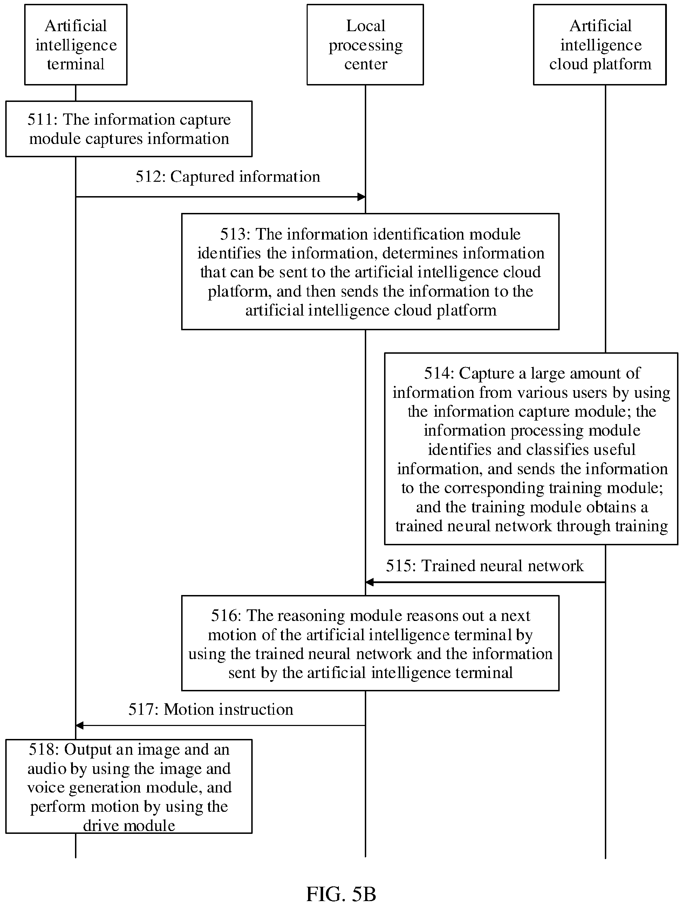

FIG. 5B is an interaction flowchart of the artificial intelligence system. When the artificial intelligence system works, the following steps are included.

511: The information capture module of the artificial intelligence terminal captures information (including an instruction of a user, current environment information, and the like).

512: The artificial intelligence terminal transmits the captured information to the local processing center.

513: After the local processing center receives the information, the information identification module identifies the information, determines information that can be sent to the artificial intelligence cloud platform, and then sends the information to the artificial intelligence cloud platform.

514: The artificial intelligence cloud platform captures a large amount of information from various users by using the information capture module. The information processing module identifies and classifies useful information, and sends the information to a corresponding training module. The training module obtains a trained neural network through training.

515: The artificial intelligence cloud platform sends the trained neural network to the local processing center.

516: The reasoning module of the local processing center reasons out a next motion of the artificial intelligence terminal by using the trained neural network and the information sent by the artificial intelligence terminal.

517: The local processing center sends a motion instruction to the artificial intelligence terminal.

518: After receiving the motion instruction sent by the local processing center, the artificial intelligence terminal outputs an image and a sound by using the image and voice generation module, and performs motion by using the drive module.

In this embodiment, the reasoning module of the artificial intelligence cloud platform is delegated to the local processing center by disposing the local processing center, so that security and privacy of user data can be ensured. This also helps reduce a latency and update the artificial intelligence scenario in time.

In the embodiment corresponding to FIG. 5A, the artificial intelligence terminal is not directly connected to the artificial intelligence cloud platform. It should be noted that, in some possible embodiments, the artificial intelligence terminal may be connected to the artificial intelligence cloud platform, and the artificial intelligence terminal directly sends the user information to the artificial intelligence cloud platform. A connection mode may be NR, LTE, or the like.

The artificial intelligence system corresponding to FIG. 5A includes only one artificial intelligence terminal, one local processing center, and one artificial intelligence cloud platform. It should be noted that the artificial intelligence system is not limited to including only one artificial intelligence terminal, one local processing center, and one artificial intelligence cloud platform. One local processing center in the artificial intelligence system can serve a plurality of artificial intelligence terminals or interact with a plurality of artificial intelligence cloud platforms. During specific implementation, an interaction procedure is similar to the interaction procedure shown in FIG. 5B, and details are not described herein.

It may be understood that, in the artificial intelligence system, training requires a long period of time, and the neural network is not updated in real time. Therefore, the artificial intelligence cloud platform does not need to be connected to the local processing center in real time, and the local processing center may first store user information to be sent to the artificial intelligence cloud platform. A user can determine a time period in which the artificial intelligence cloud platform communicates with the local processing center.

### Embodiment 4

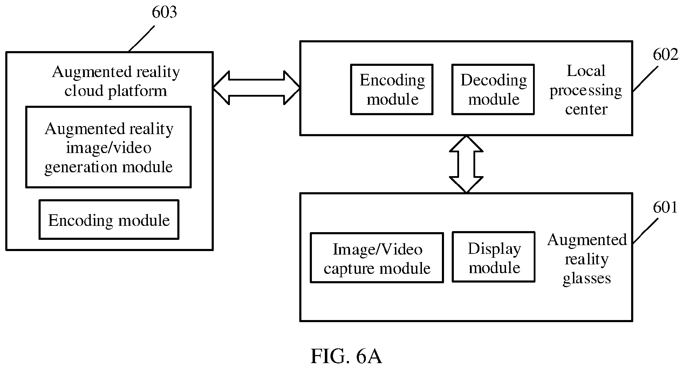

An application scenario of this embodiment is the field of augmented reality, and an augmented reality application is implemented by using an augmented reality system. In this embodiment, FIG. 6A is a schematic structural diagram of an augmented reality system. The augmented reality system includes: augmented reality glasses 601, a local processing center 602, and an augmented reality cloud platform 603. The augmented reality glasses 601 serve as a first terminal, and the augmented reality cloud platform 603 serves as a remote processing center.

The augmented reality cloud platform 603 includes parts such as an augmented reality image/video generation module and an encoding module. The augmented reality image/video generation module analyzes and calculates an image/a video uploaded by the local processing center 602, to generate a corresponding augmented reality image/video. The encoding module encodes the augmented reality image/video, and an image encoding format may include a format such as JPEG, PNG, or GIF, and a video coding format may include a format such as H.264 or H.265.

The local processing center 602 is a device having a strong decoding capability, for example, a device such as a mobile phone or a personal computer. The local processing center 602 includes parts such as an encoding module and a decoding module. The encoding module encodes an image/a video captured by the augmented reality glasses 601, and the decoding module decodes the augmented reality image/video sent by the augmented reality cloud platform. An image encoding format may include a format such as JPEG, PNG, or GIF, and a video coding format includes a format such as H.264 or H.265.

The augmented reality glasses 601 include parts such as an image/video capture module and a display module. The image/video capture module captures an image/a video, and the display module displays the augmented reality image/video obtained from the local processing center 602 to the user.

The augmented reality glasses 601 transmit the captured image/video to the local processing center 602, and the local processing center 602 transmits decoded augmented reality image/video to the augmented reality glasses 601. The augmented reality glasses 601 and the local processing center 602 are connected by using a radio link. A connection mode includes WiGig, mmWave, Wi-Fi, NR, LTE, or the like. Uplink and downlink information transmission between the augmented reality glasses 601 and the local processing center 602 may be performed in a same mode. For example, WiGig is used for both the uplink and downlink transmission. Alternatively, the uplink and downlink transmission may be performed in different modes. For example, Wi-Fi is used for the uplink transmission from the augmented reality glasses 601 to the local processing center 602, and WiGig is used for the downlink transmission from the local processing center 602 to the augmented reality glasses 601. When a same technology is used for the uplink and downlink transmission, time division duplex may be used, or frequency division duplex may be used.

The augmented reality glasses 601 transmit instruction information of the user to the augmented reality cloud platform 603, and the augmented reality cloud platform 603 transmits the encoded augmented reality image/video to the local processing center 602. A connection mode of the local processing center 602 and the augmented reality cloud platform 603 includes but is not limited to fixed network broadband, NR, LTE, or the like. Uplink and downlink information transmission between the augmented reality cloud platform 603 and the augmented reality glasses 601 may be performed in a same mode. For example, fixed network broadband is used for both the uplink and downlink transmission. Alternatively, the uplink and downlink transmission may be performed in different modes. For example, NR is used for the uplink transmission from the augmented reality glasses 601 to the augmented reality cloud platform 603, and fixed network broadband is used for the downlink transmission from the augmented reality cloud platform 603 to the local processing center 602.

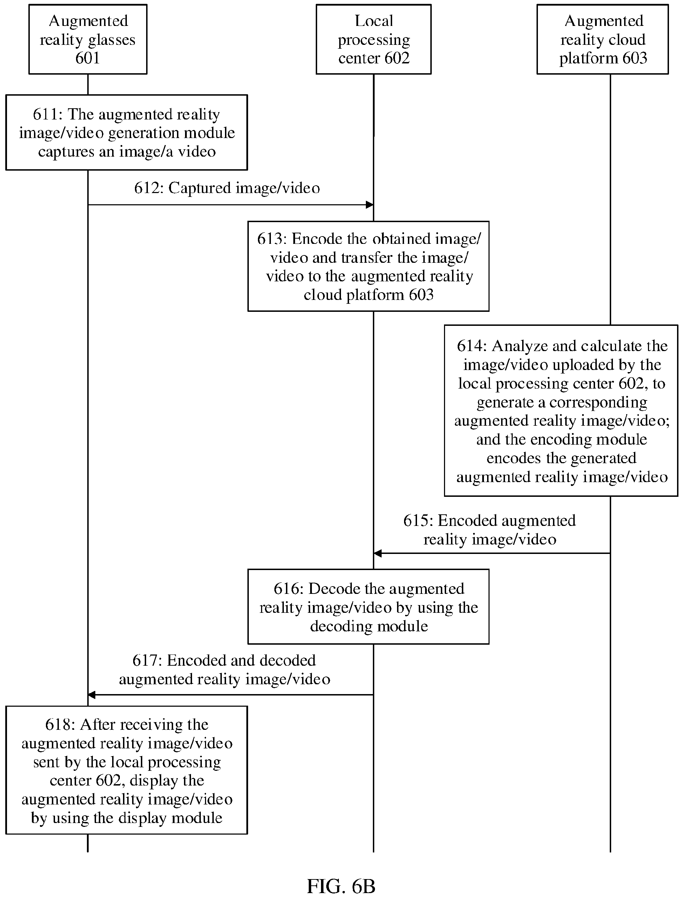

FIG. 6B is an interaction flowchart of the augmented reality system. When the augmented reality system performs the augmented reality application, the following steps are included.

611: The augmented reality glasses 601 capture an image/a video by using the augmented reality image/video generation module.

612: The augmented reality glasses 601 transmit the captured image/video to the local processing center 602.

613: The local processing center 602 encodes the obtained image/video and transfers the image/video to the augmented reality cloud platform 603.

614: The augmented reality cloud platform 603 analyzes and calculates the image/video uploaded by the local processing center 602, to generate a corresponding augmented reality image/video. The encoding module encodes the generated augmented reality image/video.

615: The augmented reality cloud platform 603 sends the encoded augmented reality image/video to the local processing center 602.

616: The local processing center 602 decodes the augmented reality image/video by using the decoding module.

617: The local processing center 602 sends the encoded and decoded augmented reality image/video to the augmented reality glasses 601.

618: After receiving the augmented reality image/video sent by the local processing center 602, the augmented reality glasses 601 display the augmented reality image/video by using the display module.

It should be noted that the augmented reality system is not limited to including only one pair of augmented reality glasses, one local processing center, or one augmented reality cloud platform. One local processing center in the augmented reality system may be corresponding to a plurality of pairs of augmented reality glasses and a plurality of augmented reality cloud platforms. Similarly, one augmented reality system may alternatively include a plurality of local processing centers, and quantities of components are not limited. It may be understood that the augmented reality glasses may alternatively be another augmented reality terminal. During specific implementation, an interaction procedure is similar to the interaction procedure shown in FIG. 6B, and details are not described herein.

Complexity of encoding is usually higher than complexity of decoding. Therefore, costs of a terminal device implementing an encoding function are higher than costs of a terminal device implementing a decoding function. To reduce costs of augmented reality glasses, in some possible embodiments, the augmented reality glasses may have a decoding function, but do not have an encoding function, and the encoding function is implemented by a local processing center. During specific implementation, the augmented reality glasses may directly send a captured image/video to an augmented reality cloud platform; or the augmented reality glasses may send the captured image/video to the local processing center, and the local processing center transmits an encoded image/video to the augmented reality cloud platform. The augmented reality cloud platform analyzes and calculates image/video information obtained from the local processing center or augmented reality glasses, and generates a corresponding augmented reality image/video. Then, the augmented reality cloud platform encodes the generated augmented reality image/video, and directly transmits the encoded image/video to the augmented reality glasses. The augmented reality glasses decode the received image/video, and display the decoded image/video.

In the foregoing embodiments, descriptions of the embodiments have respective focuses. For a part that is not described in detail in an embodiment, refer to related descriptions in other embodiments. In the several embodiments provided in this application, it should be understood that the disclosed apparatuses may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed.

What is disclosed above is merely examples of the embodiments of the present invention, and certainly is not intended to limit the protection scope of the present invention. A person of ordinary skill in the art may understand that all or some of processes that implement the foregoing embodiments and equivalent modifications made in accordance with the claims of the present invention shall fall within the scope of the present invention.

## Claims

1. A processing method, comprising:
obtaining, by a first terminal, a first update request, wherein the first update request comprises: an operation instruction of a user captured by the first terminal, motion information and an operation instruction that are of the user and that are captured by the first terminal, or target information captured by the first terminal;
sending, by the first terminal, a first message to a remote processing center, or sending, by the first terminal, a second message to a local processing center, wherein both the first message and the second message carry information corresponding to the first update request, the second message is used to indicate the local processing center to send a third message to the remote processing center, and the third message carries information that is corresponding to the first update request and that needs to be uploaded to the remote processing center;
obtaining, by the first terminal, a fourth message sent by the local processing center, wherein the fourth message carries second update information obtained after the local processing center performs a preset processing operation on first update information, and the first update information is information obtained by the remote processing center in response to the first message or the third message; and communicating, by the first terminal, with the local processing center by using a radio link; or after the first terminal sends the second message to the local processing center and the local processing center performs a specified operation on the received first message, obtaining, by the first terminal, a fifth message sent by the remote processing center, wherein the fifth message carries the first update information; and
updating, by the first terminal, output information of the first terminal based on the second update information carried in the fourth message; or updating, by the first terminal, output information of the first terminal based on the first update information carried in the fifth message.

2. The method according to claim 1, wherein
a radio link used when the first terminal sends the message to the local processing center is different from a radio link used when the local processing center sends the message to the first terminal.

3. The method according to claim 1 or 2, wherein
the remote processing center comprises one or more of the following cloud platforms: a cloud rendering platform, a cloud on-demand platform, an artificial intelligence cloud platform, and an augmented reality cloud platform;
the first message comprises a first request or information obtained after the first request is encoded;
the first update information comprises information obtained after the remote processing center encodes updated data obtained by performing calculation and rendering on the received first message or third message; and
the preset processing operation comprises one or more of the following operations: timewarp, encoding, decoding, artificial intelligence based reasoning, and direct transmission.

4. A processing method, comprising:
obtaining, by a local processing center, first update information obtained after a remote processing center responds to a first message or a third message, wherein the first message is information sent by a first terminal to the remote processing center, the first message comprises information about a first update request obtained by the first terminal, and the first update request comprises: an operation instruction of a user captured by the first terminal, motion information and an operation instruction that are of the user and that are captured by the first terminal, or target information captured by the first terminal; and the third message is a message sent by the local processing center to the remote processing center in response to a second message, the second message is a message sent by the first terminal to the local processing center, the second message carries the information about the first update request, the second message indicates the local processing center to send the third message to the remote processing center, and the third message carries information that is corresponding to the first update request and that needs to be uploaded to the remote processing center;
obtaining, by the local processing center, second update information after performing a preset processing operation on the first update information; and
sending, by the local processing center, a fourth message to the first terminal, wherein the fourth message comprises the second update information.

5. The method according to claim 4, wherein
the remote processing center comprises one or more of the following cloud platforms: a cloud rendering platform, a cloud on-demand platform, an artificial intelligence cloud platform, and an augmented reality cloud platform;
the first message comprises a first request or information obtained after the first request is encoded;
the first update information comprises information obtained after the remote processing center encodes updated data obtained by performing calculation and rendering on the received first message or third message; and
the preset processing operation comprises one or more of the following operations: timewarp, encoding, decoding, artificial intelligence based reasoning, and direct transmission.

6. The method according to claim 4 or 5, wherein when the local processing center does not receive, within preset duration, the first update information sent by the remote processing center, the method further comprises:
sending, by the local processing center, timeout information to the remote processing center, wherein the timeout information is used to indicate the remote processing center to perform an optimization operation.

7. A processing method, comprising:
obtaining, by a remote processing center, first update information after responding to a first message or a third message, wherein the first message is information sent by a first terminal to the remote processing center, the first message comprises information about a first update request obtained by the first terminal, and the first update request comprises: an operation instruction of a user captured by the first terminal, motion information and an operation instruction that are of the user and that are captured by the first terminal, or target information captured by the first terminal; and a second message is a message sent by the first terminal to a local processing center, the second message is used to indicate the local processing center to send the third message to the remote processing center, and the third message carries information that is corresponding to the first update request and that needs to be uploaded to the remote processing center; and
sending, by the remote processing center, a message carrying the first update information to the local processing center; sending, by the remote processing center by using the first terminal, a message carrying the first update information to the local processing center; or sending, by the remote processing center, a fifth message carrying the first update information to the first terminal.

8. The method according to claim 7, wherein
the remote processing center comprises one or more of the following cloud platforms: a cloud rendering platform, a cloud on-demand platform, an artificial intelligence cloud platform, and an augmented reality cloud platform;
the first message comprises the first update request or information obtained after the first update request is encoded;
the first update information comprises information obtained after the remote processing center encodes updated data obtained by performing calculation and rendering on the received first message or third message; and
the preset processing operation comprises one or more of the following operations: timewarp, encoding, decoding, artificial intelligence based reasoning, and direct transmission.

9. The method according to claim 8, wherein the method further comprises:
obtaining, by the remote processing center, timeout information sent by the local processing center, wherein the timeout information is used to indicate that the local processing center does not receive, within preset duration, the first update information sent by the remote processing center; and
performing, by the remote processing center, an optimization operation in response to the timeout information.

10. The method according to claim 8 or 9, wherein
the optimization operation comprises at least one of the following operations: optimizing a rendering operation by the remote processing center, optimizing a transmission process by the remote processing center, or reducing a performance parameter of transmission information by the remote processing center, wherein
the optimizing a rendering operation by the remote processing center comprises: interrupting, by the remote processing center, a rendering process of a frame currently exceeding a delay budget, and performing a rendering operation with reference to a frame corresponding to a latest update request;
the optimizing a transmission process by the remote processing center comprises: interrupting, by the remote processing center, transmission of a frame currently exceeding a delay budget, discarding all frames except the last frame in a transmission queue, and directly transmitting the last frame; and
the reducing a performance parameter of transmission information by the remote processing center comprises:
reducing, by the remote processing center, a resolution of a transmitted video or improving a quantization parameter of video coding.

11. A processing apparatus, wherein the processing apparatus serves as a first terminal and comprises:
a first obtaining unit, configured to obtain a first update request, wherein the first update request comprises: an operation instruction of a user captured by the first terminal, motion information and an operation instruction that are of the user and that are captured by the first terminal, or target information captured by the first terminal;
a first sending unit, configured to: send a first message to a remote processing center, or send a second message to a local processing center, wherein both the first message and the second message carry information corresponding to the first update request, the second message is used to indicate the local processing center to send a third message to the remote processing center, and the third message carries information that is corresponding to the first update request and that needs to be uploaded to the remote processing center, wherein
the first obtaining unit is further configured to: obtain a fourth message sent by the local processing center, wherein the fourth message carries second update information obtained after the local processing center performs a preset processing operation on first update information, and the first update information is information obtained by the remote processing center in response to the first message or the third message; and communicate with the local processing center by using a radio link; or after the first terminal sends the second message to the local processing center and the local processing center performs a specified operation on the received first message, obtain a fifth message sent by the remote processing center, wherein the fifth message carries the first update information; and
a first processing unit, configured to: update output information of the first terminal based on the second update information carried in the fourth message; or update output information of the first terminal based on the first update information carried in the fifth message.

12. The processing apparatus according to claim 11, wherein
a radio link used when the first terminal sends the message to the local processing center is different from a radio link used when the local processing center sends the message to the first terminal.

13. The processing apparatus according to claim 11 or 12, wherein
the remote processing center comprises one or more of the following cloud platforms: a cloud rendering platform, a cloud on-demand platform, an artificial intelligence cloud platform, and an augmented reality cloud platform;
the first message comprises a first request or information obtained after the first request is encoded;
the first update information comprises information obtained after the remote processing center encodes updated data obtained by performing calculation and rendering on the received first message or third message; and
the preset processing operation comprises one or more of the following operations: timewarp, encoding, decoding, artificial intelligence based reasoning, and direct transmission.

14. A processing apparatus, wherein the processing apparatus serves as a local processing center and comprises:
a second obtaining unit, configured to obtain first update information obtained after a remote processing center responds to a first message or a third message, wherein the first message is information sent by a first terminal to the remote processing center, the first message comprises information about a first update request obtained by the first terminal, and the first update request comprises: an operation instruction of a user captured by the first terminal, motion information and an operation instruction that are of the user and that are captured by the first terminal, or target information captured by the first terminal; and the third message is a message sent by the local processing center to the remote processing center in response to a second message, the second message is a message sent by the first terminal to the local processing center, the second message carries the information about the first update request, the second message indicates the local processing center to send the third message to the remote processing center, and the third message carries information that is corresponding to the first update request and that needs to be uploaded to the remote processing center;
a second processing unit, configured to obtain second update information after performing a preset processing operation on the first update information; and
a second sending unit, configured to send a fourth message to the first terminal, wherein the fourth message comprises the second update information.

15. The processing apparatus according to claim 14, wherein
the remote processing center comprises one or more of the following cloud platforms: a cloud rendering platform, a cloud on-demand platform, an artificial intelligence cloud platform, and an augmented reality cloud platform;
the first message comprises a first request or information obtained after the first request is encoded;
the first update information comprises information obtained after the remote processing center encodes updated data obtained by performing calculation and rendering on the received first message or third message; and
the preset processing operation comprises one or more of the following operations: timewarp, encoding, decoding, artificial intelligence based reasoning, and direct transmission.

16. The processing apparatus according to claim 14 or 15, wherein
the second sending unit is further configured to send timeout information to the remote processing center, wherein when the local processing center does not receive, within preset duration, the first update information sent by the remote processing center, the timeout information is used to indicate the remote processing center to perform an optimization operation.

17. A processing apparatus, wherein the processing apparatus serves as a remote processing center and comprises:
a third obtaining unit, configured to obtain a first message or a second message;
a third processing unit, configured to obtain first update information after responding to the first message or a third message, wherein the first message is information sent by a first terminal to the remote processing center, the first message comprises information about a first update request obtained by the first terminal, and the first update request comprises: an operation instruction of a user captured by the first terminal, motion information and an operation instruction that are of the user and that are captured by the first terminal, or target information captured by the first terminal; and a second message is a message sent by the first terminal to a local processing center, the second message is used to indicate the local processing center to send the third message to the remote processing center, and the third message carries information that is corresponding to the first update request and that needs to be uploaded to the remote processing center; and
a third sending unit, configured to: send a message carrying the first update information to the local processing center; send, by using the first terminal, a message carrying the first update information to the local processing center; or send a fifth message carrying the first update information to the first terminal.

18. The processing apparatus according to claim 17, wherein
the remote processing center comprises one or more of the following cloud platforms: a cloud rendering platform, a cloud on-demand platform, an artificial intelligence cloud platform, and an augmented reality cloud platform;
the first message comprises the first update request or information obtained after the first update request is encoded;
the first update information comprises information obtained after the remote processing center encodes updated data obtained by performing calculation and rendering on the received first message or third message; and
the preset processing operation comprises one or more of the following operations: timewarp, encoding, decoding, artificial intelligence based reasoning, and direct transmission.

19. The processing apparatus according to claim 18, wherein
the third obtaining unit is further configured to obtain timeout information sent by the local processing center, wherein the timeout information is used to indicate that the local processing center does not receive, within preset duration, the first update information sent by the remote processing center; and
the third processing unit is further configured to perform an optimization operation in response to the timeout information.

20. The processing apparatus according to claim 18 or 19, wherein
the optimization operation comprises at least one of the following operations: optimizing a rendering operation by the third processing unit, optimizing a transmission process by the third processing unit, or reducing a performance parameter of transmission information by the third processing unit, wherein
the optimizing a rendering operation by the third processing unit comprises: interrupting, by the third processing unit, a rendering process of a frame currently exceeding a delay budget, and performing a rendering operation with reference to a frame corresponding to a latest update request;
the optimizing a transmission process by the third processing unit comprises: interrupting, by the third processing unit, transmission of a frame currently exceeding a delay budget, discarding all frames except the last frame in a transmission queue, and directly transmitting the last frame; and
the reducing a performance parameter of transmission information by the third processing unit comprises:
reducing, by the third processing unit, a resolution of a transmitted video or improving a quantization parameter of video coding.

21. A processing system, comprising a first terminal, a local processing center, and a remote processing center, wherein
the first terminal is the processing apparatus according to any one of claims 11 to 13;
the local processing center is the processing apparatus according to any one of claims 14 to 16; and
the remote processing center is the processing apparatus according to any one of claims 17 to 20.
